# FASCICULE DE BREVET EUROPEEN

(11) **EP 3 893 416 B1**
(45) Date de publication et mention de la délivrance du brevet: **10.08.2022**
(21) Numéro de dépôt: 21162282.4
(22) Date de dépôt: 12.03.2021
(51) Int. Cl.: H04L 1/00, H04J 3/06

(54) **SYSTÈME MATÉRIEL DÉTERMINISTE DE COMMUNICATION ENTRE AU MOINS UN ÉMETTEUR ET AU MOINS UN RÉCEPTEUR, CONFIGURÉ POUR ORDONNANCER DE MANIÈRE STATIQUE ET PÉRIODIQUE LES TRAMES DE DONNÉES, ET UN PROCÉDÉ DE GESTION DE RÉCEPTION DE TRAMES DE DONNÉES**
DETERMINISTISCHES HARDWARE-KOMMUNIKATIONSSYSTEM ZWISCHEN MINDESTENS EINEM SENDER UND MINDESTENS EINEM EMPFÄNGER, DAS ZUM STATISCHEN UND PERIODISCHEN PLANEN VON DATENRAHMEN KONFIGURIERT IST, UND VERFAHREN ZUM VERWALTEN DES EMPFANGS VON DATENRAHMEN
DETERMINISTIC EQUIPMENT SYSTEM FOR COMMUNICATION BETWEEN AT LEAST ONE TRANSMITTER AND AT LEAST ONE RECEIVER, CONFIGURED TO STATICALLY AND PERIODICALLY SCHEDULE THE DATA FRAMES, AND METHOD FOR MANAGING RECEIVING OF DATA FRAMES

(30) Priorité: 09.04.2020 FR 2003553
(43) Date de publication de la demande: 13.10.2021
(73) Titulaire: Commissariat à l'Energie Atomique et aux Energies Alternatives, 75015 Paris (FR)
(72) Inventeur: MILLET, Raphaël, 91191 Gif-sur-Yvette Cedex (FR)
(74) Mandataire: Marks & Clerk France

(56) Documents cités:
- US-B2- 9 112 780
- ZHOU RUI ET AL: "On design and formal verification of SNSP: a novel real-time communication protocol for safety-critical applications", JOURNAL OF SUPERCOMPUTING, KLUWER ACADEMIC PUBLISHERS, DORDRECHT, NL, vol. 69, no. 3, 18 mars 2014 (2014-03-18), pages 1254-1283, XP035393948, ISSN: 0920-8542, DOI: 10.1007/S11227-014-1157-2 [extrait le 2014-03-18]
- AHMED NASRALLAH ET AL: "Ultra-Low Latency (ULL) Networks: The IEEE TSN and IETF DetNet Standards and Related 5G ULL Research", ARXIV.ORG, CORNELL UNIVERSITY LIBRARY, 201 OLIN LIBRARY CORNELL UNIVERSITY ITHACA, NY 14853, 20 mars 2018 (2018-03-20), XP081550814, DOI: 10.1109/COMST.2018.2869350

## Description

L'invention porte sur un système matériel déterministe de communication entre au moins un émetteur et au moins un récepteur, configuré pour ordonnancer de manière statique et périodique les trames de données, et un procédé de gestion de réception de trames de données.

L'invention se situe dans le domaine des communications entre un émetteur et un récepteur, par exemple dans l'environnement de calcul des systèmes CPS distribués, pour acronyme de "Cyber-Physical System" en langue anglaise. Un système CPS est un système dans lequel des dispositifs électroniques collaborent pour le contrôle d'entités physiques (capteurs, actionneurs...). Il y a donc besoin d'un environnement temps réel déterministe capable de faire face à l'hétérogénéité des calculs et moyens de communication. Il faut également assurer la vérification de la validité de l'ordonnancement des communications et de leurs contraintes temporelles.

Des standards existent tels le 802.1Qbv "Scheduled Traffic", le 802.1Qci "Filtering and Policing", ou le 802.1 AS "Time Synchronization".

Le standard 802.1Qbv « Scheduled Traffic » définit différentes classes de communication: Priorité1, Priorité2..., et Best Effort. Des créneaux temporels sont donc réservés afin d'assurer la disponibilité du réseau pour chaque classe. Une passerelle de communication intégrant cette norme bloque ou non les communications via un mécanisme de porte (ouverte/fermée) selon la classe détectée.

Le standard 802.1Qci "Filtering and Policing" permet de filtrer les trames selon un certain nombre de critères configurables comme la taille maximale d'une trame. Il enregistre également des statistiques concernant les trames comme le nombre de trames rejetées.

Le standard 802.1 AS "Time Synchronization" donne des solutions pour traiter le problème de la synchronisation globale du système.

Aucun de ces standards ne permet de détecter une absence de réception de trame dans un ordonnancement prédéterminé. L'article ZHOU RUI ET AL: "On design and formal verification of SNSP: a novel real-time communication protocol for safety-critical applications", JOURNAL OF SUPERCOMPUTING, vol. 69, no. 3, 18 mars 2014, XP035393948 est relatif à la détection d'erreurs dans système déterministe de communications en temps réel. Le brevet US 9112 780 B2 (FOUNDRY NETWORKS LLC [US]), 18 août 2015, concerne la gestion d'erreur dans un système 802.1 ag OAM (non-déterministe, non temps réel) à partir de comptage d'erreur, avec un en-tête contenant des informations temporelles. L'article AHMED NASRALLAH ET AL: "Ultra-Low Latency (ULL) Networks: The IEEE TSN and IETF DetNet Standards and Related 5G ULL Research", ARXIV.ORG, 20 mars 2018, XP081550814 est relatif à un résumé des techniques de systèmes 802.11 Time Sensitive Networks ainsi que considérés dans l'application, sans traitement d'erreur au récepteur.

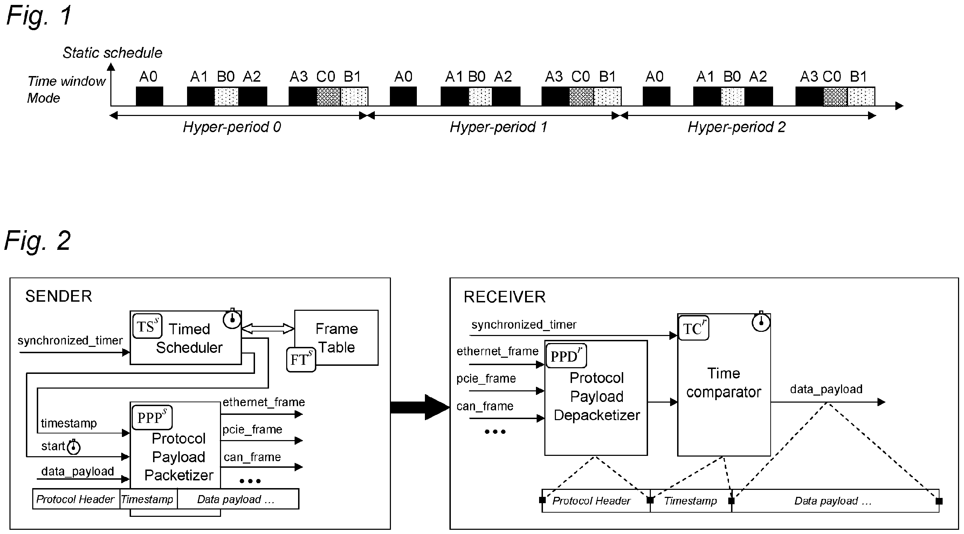

La figure 1 illustre schématiquement des hyper-périodes dans un ordonnancement statique et périodique des communications.

Sur la figure 1 sont représentées des fenêtres temporelles, ou "time window mode" en langue anglaise, pour un ordonnancement statique, ou "static schedule" en langue anglaise, et périodique.

La figure 1 représente des fenêtres temporelles périodiques. Des méthodes d'analyse hors-ligne connues prennent en compte les communications et leurs contraintes temporelles afin de définir une hyper-période ("hyper-period" en langue anglaise) dans l'ordonnancement. Cette hyper-période est composée d'une série de fenêtres temporelles, Hyper-period_0, Hyper-period_1, et Hyper-period_2, dans lesquelles sont attendues les communications.

Sur la figure 1, les données A (fenêtres d'un premier niveau de gris) correspondent au même type de données à des instants différents. Par exemple, un capteur donne des valeurs différentes à des instants différents. Selon la période d'émission pour un type de donnée, on retrouve un nombre de communications plus ou moins important par hyper-période.

La figure 2 représente schématiquement un système de communication entre un émetteur et un récepteur selon l'état de l'art.

L'émetteur SENDER intègre un ordonnanceur temporel TS^{s} en charge de déclencher les communications aux instants prévus dans l'ordonnancement. La date ou instant d'envoi Timestamp est transportée dans la trame. Un empaqueteur par protocole PPP^{t}, déclenché par un drapeau de déclenchement start, encapsule l'instant d'envoi Timestamp de la trame et les données de charge utile data_payload selon le protocole de communication utilisé. Le récepteur RECEIVER assure une vérification temporelle selon un intervalle défini ; il comprend un désempaqueteur par protocole PPD^{r} configuré pour décoder l'instant d'envoi Timestamp de la trame selon le protocole de communication utilisé et transmettre la trame désempaquetée à un comparateur temporel TC^{r}.

Ce type de solution ne permet pas de détecter toutes les dérives de l'ordonnancement. Si une trame n'arrive pas à destination ou n'est pas envoyée, le récepteur ne détecte pas d'erreur.

Un but de l'invention est de pallier les problèmes précédemment cités.

Aussi, il est proposé, selon un aspect de l'invention, un procédé de gestion de réception de trames de données en temps réel déterministe par mise en œuvre matérielle dédiée, ordonnancées de manière statique et périodique, une trame comprenant un en-tête muni d'un identifiant de la trame et d'un index représentant l'occurrence de ladite trame dans une hyper-période, comprenant les étapes consistant à :
- mémoriser, pour un identifiant de trame, un drapeau d'activation de l'identifiant de la trame représentatif de l'activité de la trame dans la configuration en cours d'exécution, un index local représentatif de l'index attendu de la trame, un drapeau d'ouverture représentatif de l'ouverture d'une fenêtre temporelle associée à l'identifiant de la trame, un instant d'ouverture et un instant de fermeture de la fenêtre temporelle, un drapeau d'acquittement représentatif de la réception valide de la trame attendue, un compteur d'erreurs de réception de trame attendue représentatif du nombre successif de trames non reçues dans la fenêtre temporelle respective prévue, un drapeau d'erreur fatale représentatif de l'atteinte, par le compteur d'erreur, d'une valeur maximale d'erreurs configurable, un nombre de valeurs possibles de l'index pouvant être prises par l'index dans une hyper-période ;
- effectuer en parallèle :
   ∘ de manière itérative :
      ▪ attendre la réception d'une trame, et à réception d'une trame, tester si l'état du drapeau d'activation de l'identifiant est levé et si le drapeau d'erreur fatale est baissé et si le drapeau d'ouverture est levé et si la valeur d'un index valide valant le reste de la division entière de la somme d'un index local de valeur l'index attendu et de la valeur du compteur d'erreurs par le nombre de valeurs possibles de l'index est égale à la valeur de l'index de la trame,
         auquel cas, réinitialiser le compteur d'erreurs à 0 et lever le drapeau d'acquittement, et si la valeur de l'index valide est inférieur au nombre de valeurs possibles index_overflow de l'index, mettre à jour la valeur de l'index local avec la valeur de l'index valide augmenté de 1, sinon réinitialiser l'index valide à 0, et sinon, rejeter la trame ; et
   ∘ de manière itérative :
      ▪ lorsque l'instant d'ouverture d'une trame est atteint, lever le drapeau d'ouverture et lorsque l'instant de fermeture est atteint, baisser le drapeau d'ouverture ;
      ▪ si le drapeau d'erreur fatale est levé, passer à la fenêtre suivante, sinon si le drapeau d'acquittement est levé alors baisser le drapeau d'acquittement, sinon incrémenter de 1 le compteur d'erreur, et si le compteur d'erreurs est de valeur différente de la valeur maximale d'erreurs, alors baisser le drapeau d'erreur fatale ;
      ▪ passer à la fenêtre temporelle suivante.

Un drapeau ou "flag" en langue anglaise, est dit levé lorsque sa valeur vaut 1 ou vrai ou valide et est dit baissé lorsque sa valeur vaut 0 ou faux ou invalide.

Un tel procédé permet de détecter une absence de réception de trame dans un ordonnancement prédéterminé.

En outre, le coût en calcul est faible. La résolution des indexs et compteurs d'erreurs est réduite (exemple : 8bits) sans réduction de la précision du système.

Dans une approche classique, des calculs sont faits sur des timers avec des résolutions conséquentes (exemple 96bits) car nécessaire pour la précision temporelle.

Dans le cas d'une implémentation matérielle, le coût calculatoire est directement lié au coût des ressources matérielles (faible empreinte silicium).

Selon un autre aspect de l'invention, il est également proposé un système matériel déterministe de communication entre au moins un émetteur et au moins un récepteur, configuré pour ordonnancer de manière statique et périodique les trames de données, une trame comprenant un en-tête muni d'un identifiant de la trame et d'un index représentant l'occurrence de ladite trame dans une hyper-période, dans lequel :
un émetteur comprend :
   - une table de trames en mémoire comprenant, par trame, des paramètres comprenant un identifiant de trame, un index représentant l'occurrence de ladite trame dans une hyper-période, une taille des données utiles, une adresse mémoire des données utiles, et un instant d'émission ;
   - un ordonnanceur temporel configuré pour :
      ∘ gérer l'ordonnancement des trames et lire la table de trames,
      ∘ déclencher l'envoi des paramètres de la trame à un encapsulateur d'en-tête pour l'ordonnancement lorsque le temps atteint l'instant d'émission de la trame, un en-tête comprenant l'identifiant et l'index ajoutés aux données utiles, et
      ∘ lire les paramètres de la trame suivante dans la table de trames dans l'ordonnancement des trames ;
   - l'encapsulateur d'en-tête pour l'ordonnancement est configuré pour encapsuler l'en-tête de la trame, puis transmettre la trame à un empaqueteur par protocole ;
   - l'empaqueteur par protocole est configuré pour encapsuler les en-têtes de trames selon le protocole de communication utilisé ; et
un récepteur comprend :
   - une table d'ordonnancement comprenant, par trame, des paramètres comprenant un identifiant de trame, un index représentant l'occurrence de ladite trame dans une hyper-période, un instant d'ouverture et un instant de fermeture d'une fenêtre temporelle associée à l'identifiant de la trame ;
   - une table de suivi comprenant un drapeau d'acquittement représentatif de la réception de la trame attendue, un compteur d'erreurs de réception de trame attendue représentatif du nombre successif de trames non reçues dans la fenêtre temporelle respective prévue, un drapeau d'erreur fatale représentatif de l'atteinte, par le compteur d'erreur, d'une valeur maximale d'erreurs configurable, et un drapeau d'ouverture représentatif de l'ouverture d'une fenêtre temporelle de la trame ;
   - une table de trame comprenant, par trame, un drapeau d'activité de l'identifiant de la trame représentatif de l'activité de la trame dans la configuration en cours d'exécution, un index local représentatif de l'index attendu de la trame, un nombre de valeurs possibles de l'index pouvant être prises par l'index dans une hyper-période ;
   - un traqueur d'ordonnancement temporel configuré pour effectuer de manière itérative :
      ∘ lire dans la table d'ordonnancement l'instant d'ouverture et l'instant de fermeture de la fenêtre temporelle ;
      ∘ lorsque l'instant d'ouverture est atteint, lever le drapeau d'ouverture, et lorsque l'instant de fermeture est atteint, baisser le drapeau d'ouverture ;
      ∘ si le drapeau d'acquittement est baissé, alors incrémenter de 1 le compteur d'erreur, sinon baisser le drapeau d'acquittement ;
      ∘ lever le drapeau d'erreur fatale si le compteur d'erreurs atteint la valeur maximale d'erreurs successives configurable ;
      ∘ passer à l'adresse suivante de la table d'ordonnancement ;
   - un désempaqueteur par protocole configuré pour décoder l'en-tête du protocole utilisé et transmettre la trame désempaquetée à un vérificateur d'ordonnancement temporel ; et
   - le vérificateur d'ordonnancement temporel configuré pour :
      ∘ extraire l'identifiant et l'index de l'en-tête de la trame désempaquetée ;
      ∘ valider la trame si le drapeau d'activité de l'identifiant est levé, que l'instant courant est compris entre l'instant d'ouverture et l'instant de fermeture de la fenêtre temporelle, et que le drapeau d'erreur fatale est baissé.

Un tel système permet le contrôle et la vérification d'un ordonnancement de communication avec contraintes temporelles de façon déterministe et à faible coût matériel (faible empreinte silicium).

Selon un mode de réalisation, le système comprend en outre un module de gestion des erreurs, configuré pour récupérer des dérives de l'ordonnancement matériel via des interruptions matérielles, et comprenant une interface de contrôle.

Ainsi, le module de supervision du système a un accès aux dérives de l'ordonnancement des communications. Basé sur ces informations, il pourra donc mener des actions de correction, d'information à une unité centrale distante, de redémarrage, ceci en fonction de la stratégie de correction des défauts définie.

Dans un mode de réalisation, le module de gestion des erreurs est embarqué dans un processeur.

En effet, il parait logique d'embarquer ce type de fonction dans un processeur. Il n'y a pas d'intérêt de l'embarquer dans un accélérateur matériel car pas de contrainte temporelle forte.

Selon un autre aspect de l'invention, il est également proposé une passerelle multi-protocoles comprenant une partie matérielle de type FPGA et une partie processeur ARM, dans laquelle :
- la partie processeur ARM comprend une configuration des IP matérielles et le module de gestion des erreurs ;
- la partie matérielle de type FPGA comprend l'implémentation matérielle de la passerelle multi-protocoles basse latence ; et
- chaque interface de protocole comprend une instance du système tel que précédemment décrit.

Dans une passerelle multi-protocoles, une implémentation matérielle à faible empreinte silicium pour la gestion de l'ordonnancement des communications est d'un grand intérêt. Cela permet de monter plus facilement à l'échelle en termes de quantité d'interfaces ordonnancées avec des contraintes temporelles propres à chacune.

Des approches logicielles ou mixtes logicielles et matérielles ont une limite concernant la partie logicielle. En effet, la gestion d'un grand nombre d'interruptions n'est pas viable pour des fonctions à contraintes temporelles critiques.

L'invention sera mieux comprise à l'étude de quelques modes de réalisation décrits à titre d'exemples nullement limitatifs et illustrés par le dessin annexé sur lequel :
Fig.1 illustre schématiquement des hyper-périodes dans un ordonnancement statique et périodique des communications, selon l'état de l'art ;
Fig.2 illustre schématiquement un système comprenant un émetteur et un récepteur mettant en œuvre un ordonnancement statique et périodique des communications, selon l'état de l'art ;

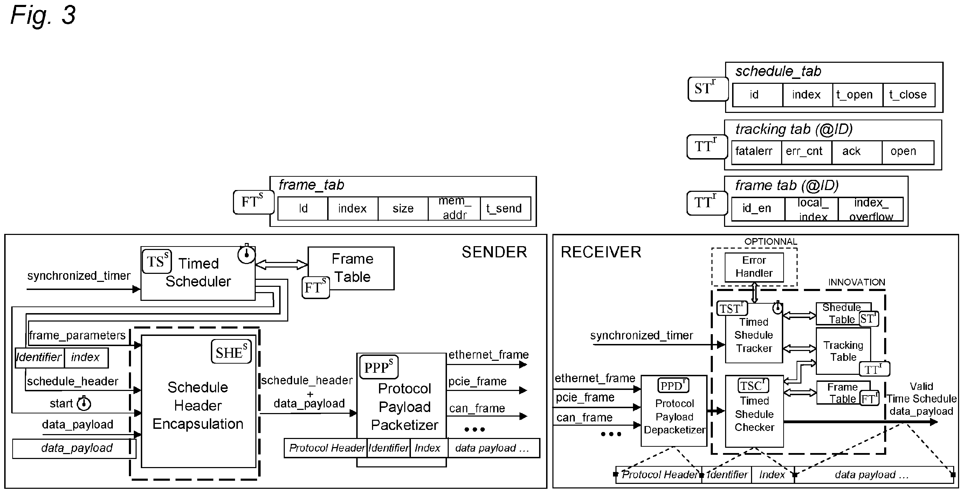

Fig.3 illustre schématiquement un système comprenant un émetteur et un récepteur mettant en œuvre un ordonnancement statique et périodique des communications, selon un aspect de l'invention ;

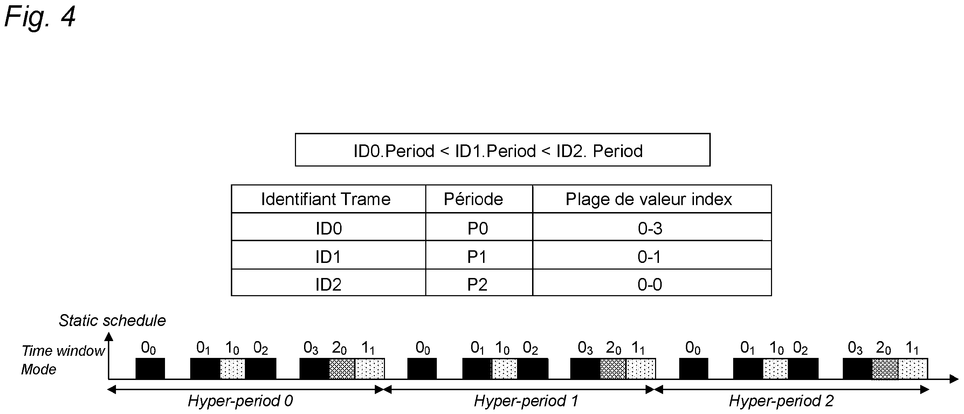

Fig.4 illustre schématiquement un exemple d'ordonnancement statique périodique, selon un aspect de l'invention ;

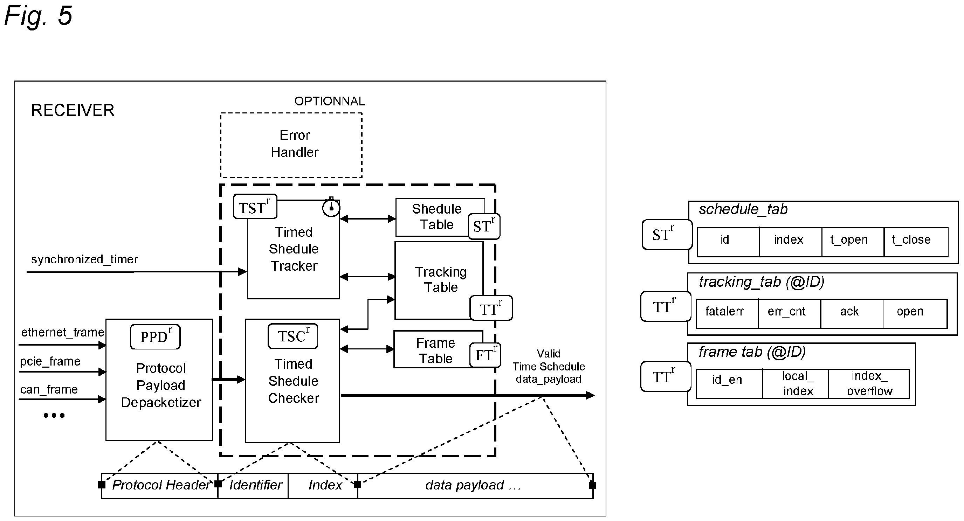

Fig.5 illustre schématiquement un récepteur, selon un autre aspect de l'invention ;

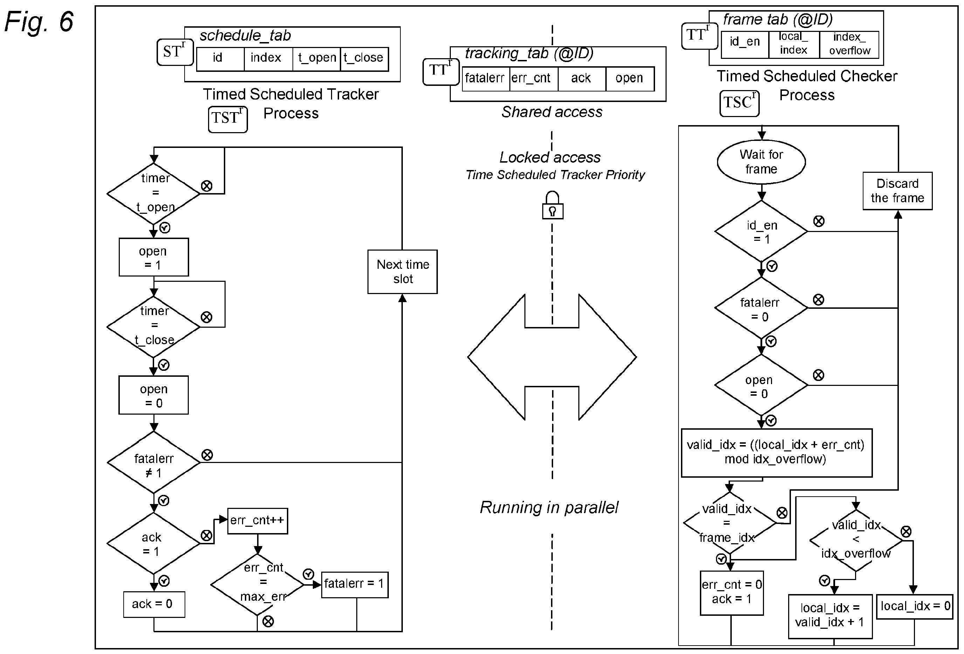

Fig.6 illustre schématiquement un procédé de gestion de réception de trames de données, ordonnancées de manière statique et périodique, selon un aspect de l'invention ;

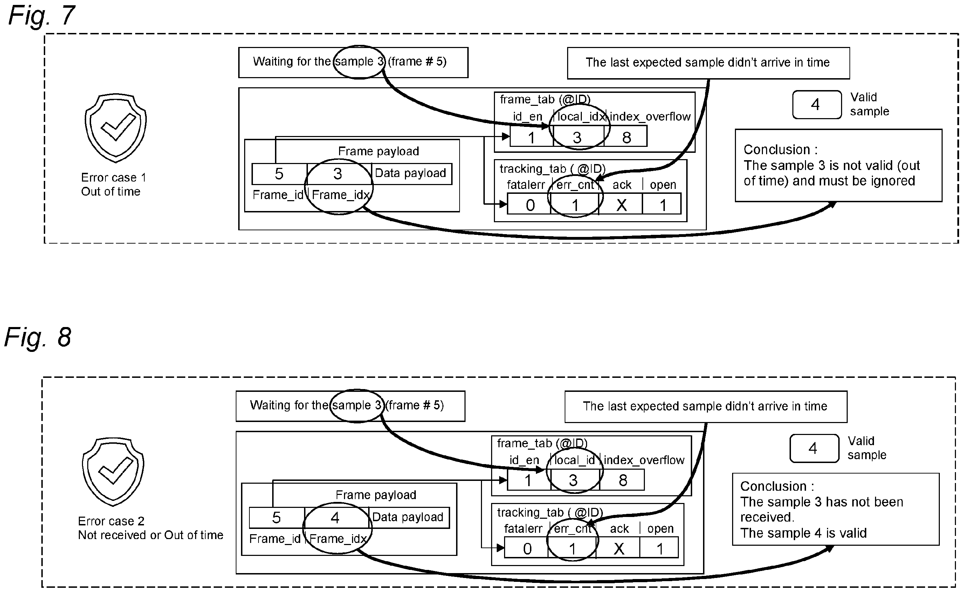

Fig.7 illustre schématiquement un exemple d'exécution du procédé de la figure 6, selon un autre aspect de l'invention ;
Fig.8 illustre schématiquement un exemple d'exécution du procédé de la figure 6, selon un autre aspect de l'invention ;

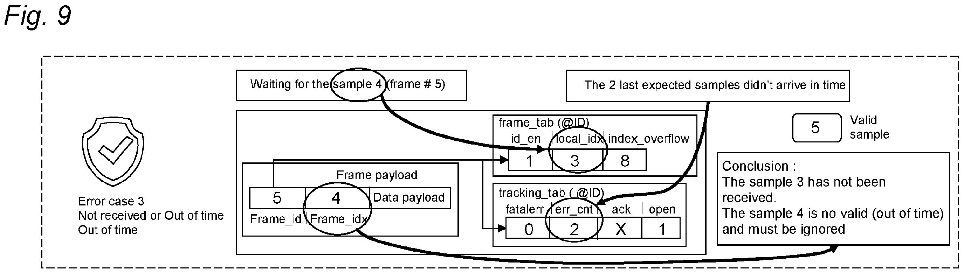

Fig.9 illustre schématiquement un exemple d'exécution du procédé de la figure 6, selon un autre aspect de l'invention ;

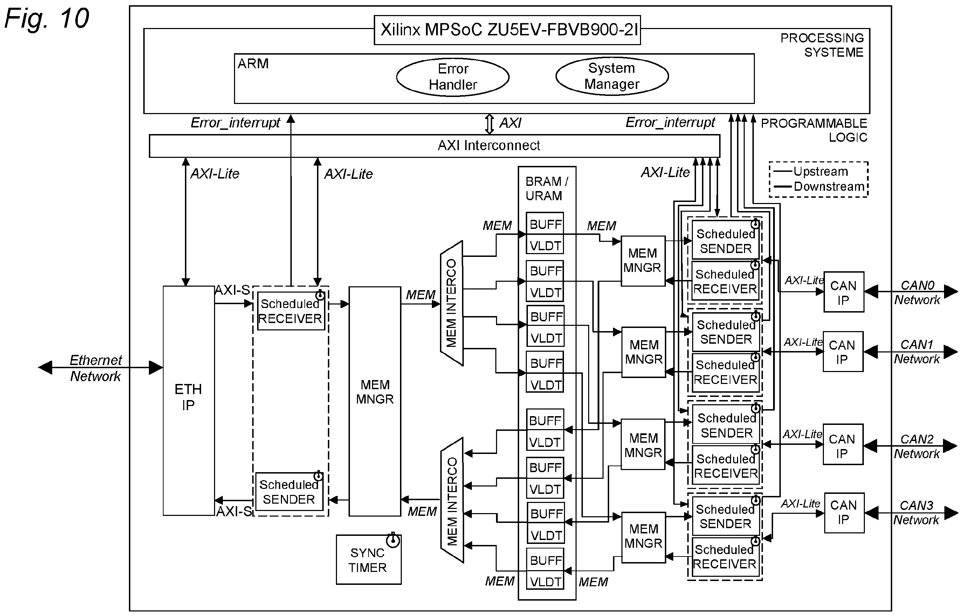

Fig.10 illustre schématiquement une passerelle multi-protocoles, selon un autre aspect de l'invention ; et

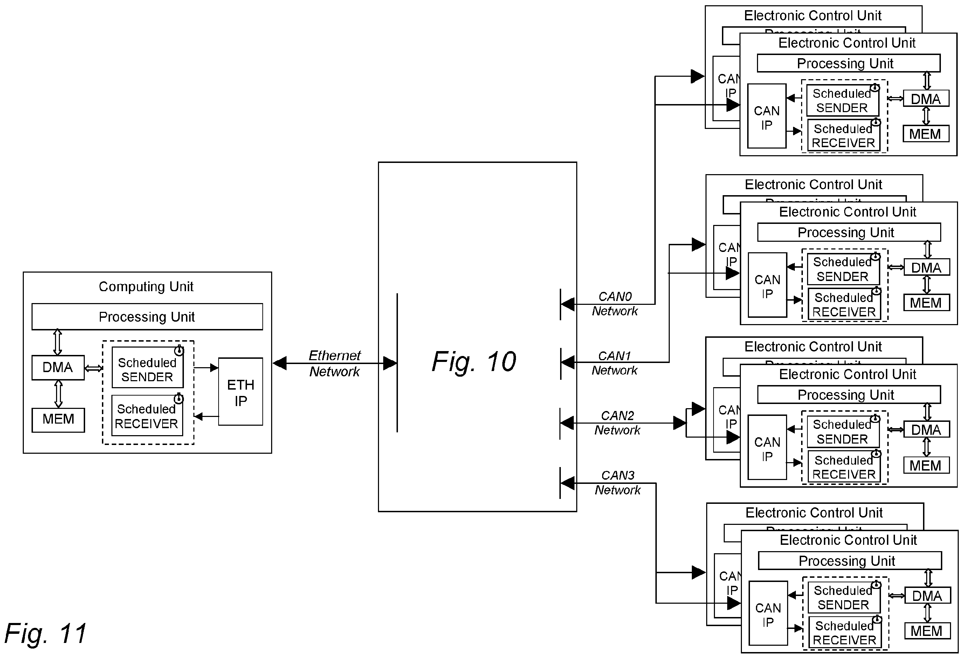

Fig.11 illustre schématiquement une passerelle multi-protocoles, selon un autre aspect de l'invention.

Sur l'ensemble des figures, les éléments ayant des références identiques sont similaires.

Sur la figure 3 est illustré, selon un aspect de l'invention, un système matériel de communication déterministe entre un émetteur SENDER et un récepteur RECEIVER en temps réel.

Dans l'implémentation matérielle proposée, l'émetteur SENDER ajoute un en-tête supplémentaire pour identifier les trames et les contraintes temporelles associées. Le récepteur RECEIVER embarque un traqueur d'ordonnancement temporel TST^{r} dédié au suivi des dérives de l'ordonnancement et un vérificateur d'ordonnancement temporel TSC^{r} situé après un désempaqueteur par protocole PPD^{r}. Une mémoire partagée permet l'échange d'information entre les modules de suivi et de vérification.

Le système est configuré pour ordonnancer de manière statique et périodique les trames de données, une trame comprenant un en-tête muni d'un identifiant id de la trame et d'un index index représentant l'occurrence de ladite trame dans une hyper-période.

L'émetteur SENDER comprend une table de trames FT^{s} en mémoire comprenant, par trame, des paramètres comprenant un identifiant de trame id, un index index représentant l'occurrence de ladite trame dans une hyper-période, une taille des données utiles size, une adresse mémoire des données utiles mem_addr, et un instant d'émission t_send.

L'émetteur SENDER comprend également :
- un ordonnanceur temporel TS^{s} configuré pour :
   ∘ gérer l'ordonnancement des trames et lire la table de trames FT^{s},
   ∘ déclencher l'envoi des paramètres de la trame à un encapsulateur d'en-tête pour l'ordonnancement SHE^{s} lorsque le temps atteint l'instant d'émission t_send de la trame, un en-tête comprenant l'identifiant id et l'index index ajoutés aux données utiles, et
   ∘ lire les paramètres de la trame suivante dans la table de trames FT^{s} dans l'ordonnancement des trames,
- l'encapsulateur d'en-tête pour l'ordonnancement SHE^{s} configuré pour encapsuler l'en-tête de la trame, puis transmettre la trame à un empaqueteur par protocole PPP^{s} ; et
- l'empaqueteur par protocole PPP^{s} configuré pour encapsuler les en-têtes de trames selon le protocole de communication utilisé.

Le récepteur RECEIVER comprend :
- une table d'ordonnancement ST^{r} comprenant, par trame, des paramètres comprenant un identifiant de trame id, un index index représentant l'occurrence de ladite trame dans une hyper-période, un instant d'ouverture t_open et un instant de fermeture t_close d'une fenêtre temporelle associée à l'identifiant id de la trame ;
- une table de suivi TT^{r} comprenant un drapeau d'acquittement ack représentatif de la réception de la trame attendue, un compteur d'erreurs err_cnt de réception de trame attendue représentatif du nombre successif de trames non reçues dans la fenêtre temporelle respective prévue, un drapeau d'erreur fatale fatalerr représentatif de l'atteinte, par le compteur d'erreurs err_cnt, d'une valeur maximale max_err d'erreurs configurable, et un drapeau d'ouverture open représentatif de l'ouverture d'une fenêtre temporelle de la trame ; et
- une table de trame FT^{r} comprenant, par trame, un drapeau d'activité de l'identifiant de la trame id_en représentatif de l'activité de la trame dans la configuration en cours d'exécution, un index local local_index représentatif de l'index attendu de la trame, un nombre de valeurs possibles de l'index index_overflow pouvant être prises par l'index index dans une hyper-période.

Le récepteur RECEIVER comprend également :
- un traqueur d'ordonnancement temporel TST^{r} configuré pour effectuer de manière itérative :
   ∘ lire dans la table d'ordonnancement ST^{r} l'instant d'ouverture t_open et l'instant de fermeture t_close de la fenêtre temporelle,
   ∘ lorsque l'instant d'ouverture t_open est atteint, lever le drapeau d'ouverture (open), et lorsque l'instant de fermeture t_close est atteint, baisser le drapeau d'ouverture open,
   ∘ si le drapeau d'acquittement ack est baissé, alors incrémenter de 1 le compteur d'erreurs err_cnt, sinon baisser le drapeau d'acquittement (ack),
   ∘ lever le drapeau d'erreur fatale fatalerr si le compteur d'erreurs err_cnt atteint la valeur maximale max_err d'erreurs successives configurable, et
   ∘ passer à l'adresse suivante de la table d'ordonnancement ST^{r},
- un désempaqueteur par protocole PPD^{r} configuré pour décoder l'en-tête du protocole utilisé et transmettre la trame désempaquetée à un vérificateur d'ordonnancement temporel TSC^{r} ; et
- le vérificateur d'ordonnancement temporel TSC^{r} configuré pour :
   ∘ extraire l'identifiant id et l'index index de l'en-tête de la trame désempaqueté, et
   ∘ valider la trame si le drapeau d'activité (id_en) de l'identifiant (id) est levé, que l'instant courant soit compris entre l'instant d'ouverture t_open et l'instant de fermeture t_close de la fenêtre temporelle, et que le drapeau d'erreur fatale fatalerr soit baissé.

En d'autres termes, dans l'émetteur SENDER, l'ordonnanceur temporel TS^{s} est en charge de l'exécution de l'ordonnancement des communications. Il lit la table de trames FT^{s} afin de récupérer les paramètres de la trame à envoyer : date d'émission t_send, identifiant id, index index, taille size et adresse mem_addr des données (stockées en mémoire). Quand le timer atteint la date d'émission, l'ordonnanceur temporel TS^{s} déclenche l'envoi et transmet à l'encapsulateur d'en-tête pour l'ordonnancement SHE^{s} les paramètres de la trame. L'ordonnanceur temporel TS^{s} lit ensuite l'adresse suivante dans la table de trames FT^{s} et poursuit le déroulé de l'ordonnancement des communications.

L'encapsulateur d'en-tête pour l'ordonnancement SHE^{s} encapsule l'en-tête composé de l'identifiant id et de l'index index avant de transmettre la trame à l'empaqueteur par protocole PPP^{s}. L'empaqueteur par protocole PPP^{s} est spécifique au protocole utilisé (Ethernet, CAN, PCIe...). Il est notamment en charge d'encapsuler la ou les en-têtes spécifiques.

De même, en d'autres termes, le traqueur d'ordonnancement temporel (TST^{r}) est un module dédié pour le suivi de l'ordonnancement des communications qui permet d'enregistrer en mémoire les dérives de cet ordonnancement. Il fait une lecture de la table d'ordonnancement ST^{r} afin de récupérer les dates d'ouverture et de fermeture de la première fenêtre temporelle. Quand le timer atteint l'instant d'ouverture t_open, le drapeau d'ouverture open de la table de suivi (TT^{r}) est activé, et est désactivé quand le timer atteint l'instant de fermeture t_close.

A ce même instant, le drapeau d'acquittement de réception ack contenu dans la table d'ordonnancement ST^{r} est consulté. S'il est inactif, le compteur d'erreurs err_cnt est incrémenté de 1 afin d'indiquer que la trame attendue n'a pas été reçue dans la fenêtre temporelle prévue. Une fois traité, le drapeau d'acquittement de réception ack est remis à zéro. Un drapeau d'erreur fatale fatalerr peut être activé si le compteur d'erreurs err_cnt atteint une valeur limite configurable. Ce signal correspond à une série d'erreurs consécutives, indiquant un défaut. Les communications associées sont donc rejetées jusqu'à nouvel ordre. Le processus continue ensuite le suivi de l'ordonnancement en passant à l'adresse suivante dans la table d'ordonnancement (ST^{r}).

Une amélioration optionnelle peut consister à avoir un processus de gestion des erreurs qui récupère les dérives de l'ordonnancement via des interruptions matérielles et une interface de contrôle. Ce module peut être embarqué dans un processeur.

A réception d'une trame, le désempaqueteur par protocole (PPD^{r}) décode l'en-tête spécifique au protocole utilisé et transmet le reste de la trame au vérificateur d'ordonnancement temporel TSC^{r}.

Le vérificateur d'ordonnancement temporel TSC^{r} extrait l'en-tête comprenant identifiant id et l'index index afin de procéder à plusieurs vérifications. Pour qu'une trame soit valide, le drapeau d'activité id_en de l'identifiant id doit être levé, le drapeau d'erreur fatale fatalerr doit être baissé, et la trame doit arriver dans la fenêtre temporelle définie par l'ordonnancement (procédé de vérification détaillé plus loin).

Un identifiant unique id et un index index sont ajoutés en en-tête des données. Ces deux informations permettent de situer une communication dans l'ordonnancement.

Comme présenté précédemment, l'analyse hors-ligne permet de définir un ordonnancement périodique. En fonction de la durée des périodes des trames qui transitent sur le réseau, une hyper-période est trouvée. Ainsi une communication avec une période d'émission de courte durée est identifiée avec un index index ayant une plage de valeurs plus élevées qu'une communication avec une période d'émission de longue durée. Pour un identifiant donné, l'index représente l'émission des données à des instants différents et permet de les situer dans l'hyper-période.

Sur l'exemple d'ordonnancement de trames de la figure 4, le premier chiffre représente l'identifiant unique id et le second chiffre représente l'index index des trames.

La figure 5 représente schématiquement un récepteur RECEIVER selon un aspect de l'invention. Le vérificateur d'ordonnancement temporel TSC^{r} est connecté derrière le désempaqueteur par protocole PPD^{r} spécifique au protocole (Ethernet, PCIe, CAN ...). L'identifiant id et l'index index, sont extraits de la trame par le module TSC^{r}.

Le processus de vérification ou procédé de gestion de réception de trames est représenté en figure 6.

Le procédé de gestion de réception de trames de données en temps réel déterministe par mise en œuvre matérielle dédiée, ordonnancées de manière statique et périodique, une trame comprenant un en-tête muni d'un identifiant id de la trame et d'un index index représentant l'occurrence de ladite trame dans une hyper-période, comprenant les étapes consistant à :
- mémoriser, pour un identifiant de trame, un drapeau d'activité de l'identifiant de la trame id_en représentatif de l'activité de la trame dans la configuration en cours d'exécution, un index local local_index représentatif de l'index attendu de la trame, un drapeau d'ouverture open représentatif de l'ouverture d'une fenêtre temporelle associée à l'identifiant id de la trame, un instant d'ouverture t_open et un instant de fermeture t_close de la fenêtre temporelle, un drapeau d'acquittement ack représentatif de la réception de la trame attendue, un compteur d'erreurs err_cnt de réception de trame attendue représentatif du nombre successif de trames non reçues dans la fenêtre temporelle respective prévue, un drapeau d'erreur fatale fatalerr représentatif de l'atteinte, par le compteur d'erreurs err_cnt, d'une valeur maximale max_err d'erreurs configurable, un nombre de valeurs possibles de l'index index_overflow pouvant être prises par l'index index dans une hyper-période ;
- effectuer en parallèle :
   ∘ de manière itérative :
      ▪ attendre la réception d'une trame, et à réception d'une trame, tester si l'état du drapeau d'identifiant id_en est levé et si le drapeau d'erreur fatale fatalerr est baissé et si le drapeau d'ouverture est levé et si la valeur d'un index valide valid_index valant le reste de la division entière de la somme d'un index local local_index de valeur l'index attendu et de la valeur du compteur d'erreurs err_cnt par le nombre de valeurs possibles de l'index index_overflow est égale à la valeur de l'index index de la trame (valid_index=(FT^{r}.local_index + TT^{r}.err_cnt) mod TT^{r}. index_overflow),
         auquel cas, réinitialiser le compteur d'erreurs err_cnt à 0 et lever le drapeau d'acquittement ack, et si la valeur de l'index valide valid_index est inférieur au nombre de valeurs possibles de l'index index_overflow mettre à jour la valeur de l'index local local_index avec la valeur de l'index valide valid_index augmenté de 1, sinon réinitialiser l'index valide valid_index à 0,
         et sinon, rejeter la trame ; et
      ∘ de manière itérative :
         ▪ lorsque l'instant d'ouverture t_open d'une trame est atteint, lever le drapeau d'ouverture open et lorsque l'instant de fermeture t_close est atteint, baisser le drapeau d'ouverture open ;
         ▪ si le drapeau d'erreur fatale est levé, passer à la fenêtre suivante, sinon si le drapeau d'acquittement ack est levé alors baisser le drapeau d'acquittement ack, sinon incrémenter de 1 le compteur d'erreurs err_cnt, et si le compteur d'erreurs err_cnt est de valeur différente de la valeur maximale max_err d'erreurs, alors baisser le drapeau d'erreur fatale fatalerr ;
         ▪ passer à la fenêtre temporelle suivante.

Deux processus décrits précédemment fonctionnent en parallèle. Ils interagissent via des données partagées contenues dans la table de suivi TT^{r}. Un mécanisme de verrouillage d'accès aux données est en place afin d'empêcher les accès concurrents à la même donnée. La stratégie mise en place donne la priorité au processus mis en œuvre par le traqueur d'ordonnancement temporel TST^{r}, ainsi, pour chaque demande d'accès concurrent en lecture ou écriture aux données partagées, le processus mis en œuvre par le vérificateur d'ordonnancement temporel TSC^{r} se met en attente jusqu'à disponibilité de la donnée.

Les figures 7, 8 et 9 représentent schématiquement trois exemples d'exécution du procédé de l'invention.

Dans le cas de la figure 7, on peut noter que l'identifiant id est bien valide (FT^{r}.id_en = 1), que le drapeau d'erreur fatale fatalerr est baissé ou inactif (TT^{r}. fatalerr = 0) et que la fenêtre temporelle est ouverte (le drapeau d'ouverture open est levé ou actif: *TT^{r}.open* = 1). Par contre, l'index attendu vaut 3 (FT^{r}.local_index = 3) et le compteur de dérive de l'ordonnancement ou compteur d'erreurs vaut 1 (TT^{r}. err_cnt = 1). On peut déduire qu'au moment de la réception, on est dans la fenêtre temporelle d'index 4. La trame d'index 3 est donc hors délai et est rejetée.

Dans le cas de la figure 8, on retrouve le même contenu des mémoires pour une trame reçu d'index 4. Etant dans la bonne fenêtre temporelle, la trame est valide. Le compteur d'erreur est remis à zéro (TT^{r}. err_cnt = 0), l'accusé de réception ou drapeau d'acquittement est levé ou activé (TT^{r}. ack = 1) et l'index en attente prend la valeur de l'index valide incrémenté de 1 (FT^{r}.local_index = 5).

Dans le cas de la figure 9, seul le compteur d'erreur a changé pour ce qui est du contenu des mémoires (TT^{r}. err_cnt = 2). On peut déduire qu'au moment de la réception, on est dans la fenêtre temporelle d'index 5. La trame d'index 3 n'a donc pas été reçue ou est hors délai, et la trame d'index 4 est hors délais et donc rejetée.

Il est aussi proposé, selon un aspect de l'invention, comme illustré sur la figure 10, une passerelle multi-protocoles comprenant une partie matérielle de type FPGA et une partie processeur ARM, dans laquelle :
- la partie processeur ARM comprend une configuration des IP matérielles et le module de gestion des erreurs ;
- la partie matérielle de type FPGA comprend l'implémentation matérielle de la passerelle multi-protocoles basse latence ;
- chaque interface de protocole comprend une instance du système.

Les figures 10 et 11 présentent un design de passerelle multi-protocoles basé sur un MPSoC Ultrascale+ de Xilinx qui comprend une partie matérielle type FPGA et une partie processeur ARM. La configuration des différentes IP matérielles (Intellectual Properties) et la gestion des erreurs sont embarqués dans la partie processeur (logiciel). La partie FPGA embarque l'implémentation matérielle de la passerelle multi-protocoles à basse latence.

Pour chaque interface (Ethernet, CAN0, CAN1...), une instance des modules de vérification de l'ordonnancement des communications est implémentée (système selon l'invention).

Ce mode de réalisation montre l'intérêt d'une solution matérielle qui peut être dupliquée pour chaque interface qui nécessite un ordonnancement déterministe des communications. En effet, une solution logicielle requiert la gestion d'un grand nombre d'interruptions et ne peut donc garantir le respect des contraintes temporelles de façon déterministe.

## Revendications

1. Procédé de gestion de réception de trames de données en temps réel déterministe par mise en œuvre matérielle dédiée, ordonnancées de manière statique et périodique, une trame comprenant un en-tête muni d'un identifiant (id) de la trame et d'un index (index) représentant l'occurrence de ladite trame dans une hyper-période, comprenant les étapes consistant à :
- mémoriser, pour un identifiant de trame, un drapeau d'activation de l'identifiant de la trame (id_en) représentatif de l'activité de la trame dans la configuration en cours d'exécution, un index local (local_index) représentatif de l'index attendu de la trame, un drapeau d'ouverture (open) représentatif de l'ouverture d'une fenêtre temporelle associée à l'identifiant (id) de la trame, un instant d'ouverture (t_open) et un instant de fermeture (t_close) de la fenêtre temporelle, un drapeau d'acquittement (ack) représentatif de la réception valide de la trame attendue, un compteur d'erreurs (err_cnt) de réception de trame attendue représentatif du nombre successif de trames non reçues dans la fenêtre temporelle respective prévue, un drapeau d'erreur fatale (fatalerr) représentatif de l'atteinte, par le compteur d'erreurs (err_cnt), d'une valeur maximale (max_err) d'erreurs configurable, un nombre de valeurs possibles de l'index (index_overflow) pouvant être prises par l'index (index) dans une hyper-période ;
- effectuer en parallèle :
∘ de manière itérative :
▪ attendre la réception d'une trame, et à réception d'une trame, tester si l'état du drapeau d'activation de l'identifiant (id_en) est levé et si le drapeau d'erreur fatale (fatalerr) est baissé et si le drapeau d'ouverture est levé et si la valeur d'un index valide (valid_index) valant le reste de la division entière de la somme d'un index local (local_index) de valeur l'index attendu et de la valeur du compteur d'erreurs (err_cnt) par le nombre de valeurs possibles de l'index (index_overflow) est égale à la valeur de l'index (index) de la trame,
auquel cas, réinitialiser le compteur d'erreurs (err_cnt) à 0 et lever le drapeau d'acquittement (ack), et si la valeur de l'index valide (valid_index) est inférieur au nombre de valeurs possibles (index_overflow) de l'index, mettre à jour la valeur de l'index local (local_index) avec la valeur de l'index valide (valid_index) augmenté de 1, sinon réinitialiser l'index valide (valid_index) à 0, et sinon, rejeter la trame ; et
∘ de manière itérative :
▪ lorsque l'instant d'ouverture (t_open) d'une trame est atteint, lever le drapeau d'ouverture (open) et lorsque l'instant de fermeture (t_close) est atteint, baisser le drapeau d'ouverture (open) ;
▪ si le drapeau d'erreur fatale est levé, passer à la fenêtre suivante, sinon si le drapeau d'acquittement (ack) est levé alors baisser le drapeau d'acquittement (ack), sinon incrémenter de 1 le compteur d'erreurs (err_cnt), et si le compteur d'erreurs (err_cnt) est de valeur différente de la valeur maximale (max_err) d'erreurs, alors baisser le drapeau d'erreur fatale (fatalerr) ;
▪ passer à la fenêtre temporelle suivante.

2. Système matériel déterministe de communication entre au moins un émetteur (SENDER) et au moins un récepteur (RECEIVER), configuré pour ordonnancer de manière statique et périodique les trames de données, une trame comprenant un en-tête muni d'un identifiant (id) de la trame et d'un index (index) représentant l'occurrence de ladite trame dans une hyper-période, dans lequel :
un émetteur (SENDER) comprend :
- une table de trames (FT^{s}) en mémoire comprenant, par trame, des paramètres comprenant un identifiant de trame (id), un index (index) représentant l'occurrence de ladite trame dans une hyper-période, une taille des données utiles (size), une adresse mémoire des données utiles (mem_addr), et un instant d'émission (t_send) ;
- un ordonnanceur temporel (TS^{s}) configuré pour :
∘ gérer l'ordonnancement des trames et lire la table de trames (FT^{s}),
∘ déclencher l'envoi des paramètres de la trame à un encapsulateur d'en-tête pour l'ordonnancement (SHE^{s}) lorsque le temps atteint l'instant d'émission (t_send) de la trame, un en-tête comprenant l'identifiant (id) et l'index (index) ajoutés aux données utiles, et
∘ lire les paramètres de la trame suivante dans la table de trames (FT^{s}) dans l'ordonnancement des trames,
- l'encapsulateur d'en-tête pour l'ordonnancement (SHE^{s}) configuré pour encapsuler l'en-tête de la trame, puis transmettre la trame à un empaqueteur par protocole (PPP^{S}) ; et
- l'empaqueteur par protocole (PPP^{S}) configuré pour encapsuler les en-têtes de trames selon le protocole de communication utilisé ;
un récepteur (RECEIVER) comprend :
- une table d'ordonnancement (ST^{r}) comprenant, par trame, des paramètres comprenant un identifiant de trame (id), un index (index) représentant l'occurrence de ladite trame dans une hyper-période, un instant d'ouverture (t_open) et un instant de fermeture (t_close) d'une fenêtre temporelle associée à l'identifiant (id) de la trame ;
- une table de suivi (TT^{r}) comprenant un drapeau d'acquittement (ack) représentatif de la réception de la trame attendue, un compteur d'erreurs (err_cnt) de réception de trame attendue représentatif du nombre successif de trames non reçues dans la fenêtre temporelle respective prévue, un drapeau d'erreur fatale (fatalerr) représentatif de l'atteinte, par le compteur d'erreurs (err_cnt), d'une valeur maximale (max_err) d'erreurs configurable, et un drapeau d'ouverture (open) représentatif de l'ouverture d'une fenêtre temporelle de la trame ;
- une table de trame (FT^{r}) comprenant, par trame, un drapeau d'activité de l'identifiant de la trame (id_en) représentatif de l'activité de la trame dans la configuration en cours d'exécution, un index local (local_index) représentatif de l'index attendu de la trame, un nombre de valeurs possibles de l'index (index_overflow) pouvant être prises par l'index (index) dans une hyper-période ;
- un traqueur d'ordonnancement temporel (TST^{r}) configuré pour effectuer de manière itérative :
∘ lire dans la table d'ordonnancement (ST^{r}) l'instant d'ouverture (t_open) et l'instant de fermeture (t_close) de la fenêtre temporelle,
∘ lorsque l'instant d'ouverture (t_open) est atteint, lever le drapeau d'ouverture (open), et lorsque l'instant de fermeture (t_close) est atteint, baisser le drapeau d'ouverture (open),
∘ si le drapeau d'acquittement (ack) est baissé, alors incrémenter de 1 le compteur d'erreurs (err_cnt), sinon baisser le drapeau d'acquittement (ack),
∘ lever le drapeau d'erreur fatale (fatalerr) si le compteur d'erreurs (err_cnt) atteint la valeur maximale (max_err) d'erreurs successives configurable, et
∘ passer à l'adresse suivante de la table d'ordonnancement (ST^{r})
- un désempaqueteur par protocole (PPD^{r}) configuré pour décoder l'en-tête du protocole utilisé et transmettre la trame désempaquetée à un vérificateur d'ordonnancement temporel (TSC^{r}) ; et
- le vérificateur d'ordonnancement temporel (TSC^{r}) configuré pour :
∘ extraire l'identifiant (id) et l'index (index) de l'en-tête de la trame désempaqueté, et
∘ valider la trame si le drapeau d'activité (id_en) de l'identifiant est levé, que l'instant courant est compris entre l'instant d'ouverture (t_open) et l'instant de fermeture (t_close) de la fenêtre temporelle, et que le drapeau d'erreur fatale (fatalerr) est baissé.

3. Système selon la revendication précédente, comprenant en outre un module de gestion des erreurs, configuré pour récupérer des dérives de l'ordonnancement matériel via des interruptions matérielles, et comprenant une interface de contrôle.

4. Système selon la revendication précédente, dans lequel le module de gestion des erreurs est embarqué dans un processeur.

5. Passerelle multi-protocoles comprenant une partie matérielle de type FPGA et une partie processeur ARM, dans laquelle :
- la partie processeur ARM comprend une configuration des IP matérielles et le module de gestion des erreurs ;
- la partie matérielle de type FPGA comprend l'implémentation matérielle de la passerelle multi-protocoles basse latence ;
- chaque interface de protocole comprend une instance du système selon l'une des revendications 2 à 4.

## Patentansprüche

1. Verfahren zum Verwalten des Empfangs von Datenframes in deterministischer Echtzeit durch Implementieren von dedizierter Hardware, die statisch und periodisch angeordnet sind, wobei ein Frame einen Header, der mit einer Kennung (id) für den Frame versehen ist, und einen Index (index) aufweist, der das Auftreten des Frames in einer Hyperperiode repräsentiert, das die folgenden Schritte umfasst:
- Speichern, für eine Frame-Kennung, eines Aktivierungsflags für die Kennung des Frames (id_en), das die Aktivität des Frames in der laufenden Konfiguration repräsentiert, eines lokalen Index (local_index), der den erwarteten Index des Frames repräsentiert, eines Öffnungsflags (open), das das Öffnen eines mit der Kennung (id) des Frames assoziierten Zeitfensters repräsentiert, eines Öffnungszeitpunkts (t_open) und eines Schließzeitpunkts (t_close) für das Zeitfenster, eines Quittierungsflags (ack), das den gültigen Empfang des erwarteten Frames repräsentiert, eines Fehlerzählers (err_cnt) für den Empfang des erwarteten Frames, der die aufeinanderfolgende Anzahl von Frames repräsentiert, die nicht in dem jeweiligen vorgesehenen Zeitfenster empfangen wurden, eines Fataler-Fehler-Flags (fatalerr), das das Erreichen eines konfigurierbaren maximalen Fehlerwerts (max_err) durch den Fehlerzähler (err_cnt) repräsentiert, einer Anzahl von möglichen Werten des Index (index_overflow), die der Index (index) in einer Hyperperiode annehmen kann;
- paralleles Ausführen:
∘ auf iterative Weise:
▪ Warten auf den Empfang eines Frames, und Testen, bei Empfang eines Frames, ob der Status des Aktivierungsflags für die Kennung (id_en) erhöht ist und ob das Fataler-Fehler-Flag (fatalerr) gesenkt ist und ob das Öffnungsflag erhöht ist und ob der Wert eines gültigen Index (valid_index) gleich dem Rest der ganzzahligen Division der Summe eines lokalen Index (local_index) von Wert des erwarteten Index, und mit dem Wert des Fehlerzählers (err_cnt) durch die Anzahl der möglichen Werte des Index (index_overflow) gleich dem Wert des Index (index) des Frames ist,
wenn ja, Zurücksetzen des Fehlerzählers (err_cnt) auf 0 und Erhöhen des Quittierungsflags (ack), und Aktualisieren, wenn der Wert des gültigen Index (valid_index) niedriger ist als die Anzahl der möglichen Werte (index_overflow) des Index, des Wertes des lokalen Index (local_index) mit dem Wert des gültigen Index (valid_index), erhöht um 1, andernfalls Zurücksetzen des gültigen Index (valid_index) auf 0, und andernfalls Zurückweisen des Frames; und
∘ auf iterative Weise:
▪ Erhöhen des Öffnungsflags (open), wenn der Öffnungszeitpunkt (t_open) für einen Frame erreicht ist, und Senken des Öffnungsflags (open), wenn der Schließzeitpunkt (t_close) erreicht ist;
▪ Weitergehen zum nächsten Fenster, wenn das Fataler-Fehler-Flag erhöht ist, andernfalls Senken des Quittierungsflags (ack), wenn das Quittierungsflag (ack) erhöht ist, andernfalls Inkrementieren des Fehlerzählers (err_cnt) um 1, und Senken des Fataler-Fehler-Flags (fatalerr), wenn der Fehlerzähler (err_cnt) einen anderen Wert als den maximalen Fehlerwert (max_err) hat;
▪ Weitergehen zum nächsten Zeitfenster.

2. Deterministisches Hardware-System für die Kommunikation zwischen mindestens einem Sender (SENDER) und mindestens einem Empfänger (RECEIVER), das zum statischen und periodischen Zeitplanen der Datenframes konfiguriert ist, wobei ein Frame einen Header umfasst, der mit einer Kennung (id) des Frames und einem Index (index) versehen ist, der das Auftreten des Frames in einer Hyperperiode repräsentiert, wobei:
ein Sender (SENDER) Folgendes umfasst:
- eine gespeicherte Frame-Tabelle (FT^{s}), die für jeden Frame Parameter enthält, die eine Frame-Kennung (id), einen Index (index), der das Auftreten des Frames in einer Hyperperiode darstellt, eine Nutzdatengröße (size), eine Nutzdatenspeicheradresse (mem_addr) und einen Sendezeitpunkt (t_send) umfassen;
- einen Zeitplaner (TS^{s}), der konfiguriert ist zum:
∘ Verwalten des Frame-Zeitplans und Lesen der Frame-Tabelle (FT^{s}),
∘ Auslösen des Sendens der Parameter des Frames zu einem Schedule Header Encapsulator (SHE^{s}), wenn die Zeit den Sendezeitpunkt (t_send) für den Frame erreicht, wobei ein Header die Kennung (id) und den Index (index) umfasst, die zu den Nutzdaten hinzugefügt werden, und
∘ Lesen der Parameter des nächsten Frames in der Frame-Tabelle (FT^{s}) im Frame-Zeitplan,
- wobei der Schedule Header Encapsulator (SHEs) zum Einkapseln des Headers des Frames und dann Übertragen des Frames zu einem Protocol Payload Packetizer (PPP^{S}) konfiguriert ist; und
- wobei der Protocol Payload Packetizer (PPP^{S}) zum Einkapseln der Frame-Headers gemäß dem verwendeten Kommunikationsprotokoll konfiguriert ist;
ein Empfänger (RECEIVER) Folgendes umfasst:
- eine Zeitplantabelle (ST^{r}), die pro Frame Parameter enthält, die eine Frame-Kennung (id), einen Index (index), der das Auftreten des Frames in einer Hyperperiode darstellt, einen Öffnungszeitpunkt (t_open) und einen Schließzeitpunkt (t_close) für ein mit der Kennung (id) des Frames assoziiertes Zeitfenster umfassen;
- eine Verfolgungstabelle (TT^{r}), die ein Quittierungsflag (ack), das den Empfang des erwarteten Frames repräsentiert, einen Fehlerzähler (err_cnt) für den Empfang des erwarteten Frames, der die aufeinanderfolgende Anzahl von Frames repräsentiert, die nicht in dem jeweiligen vorgesehenen Zeitfenster empfangen wurden, ein Fataler-Fehler-Flag (fatalerr), das das Erreichen eines konfigurierbaren maximalen Fehlerwerts (max_err) durch den Fehlerzähler (err_cnt) repräsentiert, und ein Öffnungsflag (open) umfasst, das die Öffnung eines Zeitfensters für den Frame repräsentiert;
- eine Frame-Tabelle (FT^{r}), die pro Frame ein Aktivierungsflag für die Kennung des Frames (id_en), der die Aktivität des Frames in der aktuell laufenden Konfiguration darstellt, einen lokalen Index (local_index), der den erwarteten Index für den Frame repräsentiert, eine Anzahl möglicher Werte des Index (index_overflow) umfasst, die der Index (index) in einer Hyperperiode annehmen kann,
- einen Zeitplan-Tracker (TST^{r}), der so konfiguriert ist, dass er iterativ Folgendes durchführt:
∘ Lesen, in der Zeitplantabelle (ST^{r}), des Öffnungszeitpunkts (t_open) und des Schließzeitpunkts (t_close) für das Zeitfenster,
∘ Erhöhen des Öffnungsflags (open), wenn der Öffnungszeitpunkt (t_open) erreicht ist, und Senken des Öffnungsflags (open), wenn der Schließzeitpunkt (t_close) erreicht ist,
∘ Inkrementieren des Fehlerzählers (err_cnt) um 1, wenn das Quittierungsflag (ack) gesenkt ist, andernfalls Senken des Quittierungsflags (ack),
∘ Erhöhen des Fataler-Fehler-Flags (fatalerr), wenn der Fehlerzähler (err_cnt) den konfigurierbaren Höchstwert für aufeinanderfolgende Fehler (max_err) erreicht, und
∘ Weitergehen zur nächsten Adresse in der Zeitplantabelle (ST^{r})
- einen Protocol Payload Depacketizer (PPD^{r}), der zum Decodieren des Headers des verwendeten Protokolls und zum Übertragen des entpackten Frames zu einem Zeitplanprüfer (TSC^{r}) konfiguriert ist; und
- den Zeitplan-Prüfer (TSC^{r}), konfiguriert zum:
∘ Extrahieren der Kennung (id) und des Index (index) aus dem Header des entpackten Frames, und
∘ Validieren des Frames, wenn das Aktivitätsflag (id_en) für die Kennung erhöht ist, der aktuelle Zeitpunkt zwischen dem Öffnungszeitpunkt (t_open) und dem Schließzeitpunkt (t_close) für das Zeitfenster liegt und das Fataler-Fehler-Flag (fatalerr) gesenkt ist.

3. System nach dem vorhergehenden Anspruch, das ferner ein Fehlerbehandlungsmodul umfasst, das zum Beheben von Hardware-Zeitplanabweichungen über Hardware-Interrupts konfiguriert ist und eine Steuerschnittstelle umfasst.

4. System nach dem vorhergehenden Anspruch, bei dem das Fehlerbehandlungsmodul in einen Prozessor eingebettet ist.

5. Multiprotokoll-Gateway, das einen FPGA-Hardwareteil und einen ARM-Prozessorteil umfasst, wobei:
- der ARM-Prozessorteil eine Konfiguration der IP-Hardware und des Fehlerbehandlungsmoduls umfasst;
- der Hardwareteil vom FPGA-Typ die Hardware-Implementation des Multiprotokoll-Gateways mit niedriger Latenz umfasst;
- jede Protokollschnittstelle eine Instanz des Systems nach einem der Ansprüche 2 bis 4 umfasst.

## Claims

1. A method for managing the reception of data frames in deterministic real time by implementing dedicated hardware, the data frames being scheduled statically and periodically, a frame comprising a header provided with an identifier (id) of the frame and an index (index) representing the occurrence of said frame in a hyper-period, comprising the steps of:
- storing, for a frame identifier, an activation flag for the identifier of the frame (id_en) representative of the activity of the frame in the configuration currently running, a local index (local_index) representative of the expected index for the frame, an open flag (open) representative of the opening of a time window associated with the identifier (id) of the frame, an opening time (t_open) and a closing time (t_close) for the time window, an acknowledgement flag (ack) representative of the valid reception of the expected frame, an error counter (err_cnt) for expected frame reception representative of the successive number of frames not received in the expected respective time window, a fatal error flag (fatalerr) representative of the error counter (err_cnt) reaching a configurable maximum error value (max_err), a number of possible values of the index (index_overflow) that may be taken by the index (index) in a hyper-period;
- performing in parallel:
∘ iteratively:
▪ waiting for the reception of a frame, and on reception of a frame, testing whether the status of the activation flag for the identifier (id_en) is raised, and whether the fatal error flag (fatalerr) is lowered, and whether the open flag is raised, and whether the value of a valid index (valid_index) equal to the remainder of the Euclidean division of the sum of a local index (local_index) of value expected index, and the value of the error counter (err_cnt) by the number of possible values of the index (index_overflow) is equal to the value of the index (index) of the frame,
if so, resetting the error counter (err_cnt) to 0 and raising the acknowledgement flag (ack), and if the value of the valid index (valid_index) is lower than the number of possible values (index_overflow) of the index, updating the value of the local index (local_index) with the value of the valid index (valid_index) increased by 1, otherwise resetting the valid index (valid_index) to 0,
and otherwise, rejecting the frame; and
∘ iteratively:
▪ when the opening time (t_open) for a frame is reached, raising the open flag (open) and when the closing time (t_close) is reached, lowering the open flag (open);
▪ if the fatal error flag is raised, moving on to the next window, otherwise, if the acknowledgement flag (ack) is raised, then lowering the acknowledgement flag (ack), otherwise incrementing the error counter (err_cnt) by 1, and if the error counter (err_cnt) has a different value than the maximum error value (max_err), then lowering the fatal error flag (fatalerr);
▪ moving on to the next time window.

2. A deterministic hardware system for communication between at least one sender (SENDER) and at least one receiver (RECEIVER), configured to statically and periodically schedule the data frames, a frame comprising a header provided with an identifier (id) of the frame and an index (index) representing the occurrence of said frame in a hyper-period, in which:
a sender (SENDER) comprises:
- a stored frame table (FT^{s}) comprising, for each frame, parameters comprising a frame identifier (id), an index (index) representing the occurrence of said frame in a hyper-period, a payload data size (size), a payload data memory address (mem_addr), and a sending time (t_send);
- a time scheduler (TS^{s}) configured to:
∘ manage the frame schedule and read the frame table (FT^{s}),
∘ trigger the sending of the parameters of the frame to a schedule header encapsulator (SHE^{s}) when the time reaches the sending time (t_send) for the frame, a header comprising the identifier (id) and the index (index) that are added to the payload data, and
∘ read the parameters of the next frame in the frame table (FT^{s}) in the frame schedule,
- the schedule header encapsulator (SHE^{s}) configured to encapsulate the header of the frame, then transmit the frame to a protocol payload packetiser (PPP^{S}); and
- the protocol payload packetiser (PPP^{S}) configured to encapsulate the frame headers according to the communication protocol used;
a receiver (RECEIVER) comprises:
- a schedule table (ST^{r}) comprising, per frame, parameters comprising a frame identifier (id), an index (index) representing the occurrence of said frame in a hyper-period, an opening time (t_open) and a closing time (t_close) for a time window associated with the identifier (id) of the frame;
- a tracking table (TT^{r}) comprising an acknowledgement flag (ack) representative of the reception of the expected frame, an error counter (err_cnt) for expected frame reception representative of the successive number of frames not received in the expected respective time window, a fatal error flag (fatalerr) representative of the error counter (err_cnt) reaching a configurable maximum error value (max_err), and an open flag (open) representative of the opening of a time window for the frame;
- a frame table (FT^{r}) comprising, per frame, an activation flag for the identifier of the frame (id_en) representative of the activity of the frame in the configuration currently running, a local index (local_index) representative of the expected index for the frame, a number of possible values of the index (index_overflow) that may be taken by the index (index) in a hyper-period;
- a timed schedule tracker (TST^{r}) configured to perform, iteratively:
∘ reading, in the schedule table (ST^{r}), the opening time (t_open) and the closing time (t_close) for the time window,
∘ when the opening time (t_open) is reached, raising the open flag (open) and when the closing time (t_close) is reached, lowering the open flag (open),
∘ if the acknowledgement flag (ack) is lowered, then incrementing the error counter (err_cnt) by 1, otherwise lowering the acknowledgement flag (ack),
∘ raising the fatal error flag (fatalerr) if the error counter (err_cnt) reaches the configurable maximum value of successive errors (max_err), and
∘ moving on to the next address in the schedule table (ST^{r})
- a protocol payload depacketiser (PPD^{r}) configured to decode the header of the protocol used and transmit the depacketised frame to a timed schedule checker (TSC^{r}); and
- the timed schedule checker (TSC^{r}) configured to:
∘ extract the identifier (id) and the index (index) from the header of the depacketised frame, and
∘ validate the frame if the activity flag (id_en) for the identifier is raised, the current time is between the opening time (t_open) and the closing time (t_close) of the time window, and the fatal error flag (fatalerr) is lowered.

3. The system according to the preceding claim, further comprising an error handler module, configured to recover hardware schedule drifts via hardware interrupts, and comprising a control interface.

4. The system according to the preceding claim, wherein the error handler module is embedded in a processor.

5. A multi-protocol gateway comprising an FPGA-type hardware portion and an ARM processor portion, wherein
- the ARM processor portion comprises a configuration of the hardware IP and the error handler module;
- the FPGA-type hardware portion comprises the hardware implementation of the low-latency multi-protocol gateway;
- each protocol interface comprises an instance of the system according to one of claims 2 to 4.
